# EUROPEAN PATENT SPECIFICATION

(11) **EP 3 710 795 B1**
(45) Date of publication and mention of the grant of the patent: **03.04.2024**
(21) Application number: 18815112.0
(22) Date of filing: 19.11.2018
(51) Int. Cl.: G01F 23/296, G01B 17/02, G01N 29/11, G01N 29/22, G01N 29/24, G01F 23/2965

(54) **DEVICE AND METHOD FOR DETECTING DEPOSITION LAYERS IN A CONDUIT CONDUCTING A LIQUID OR A SOFT MEDIUM AND/OR FOR LEVEL DETECTION**
VORRICHTUNG UND VERFAHREN ZUR DETEKTION VON ABSCHEIDUNGSSCHICHTEN IN EINER LEITUNG ZUM TRANSPORT EINER FLÜSSIGKEIT ODER EINES WEICHEN MEDIUMS UND/ODER ZUR PEGELDETEKTION
DISPOSITIF ET PROCÉDÉ POUR DÉTECTER DES COUCHES DE DÉPÔT DANS UN CONDUIT ACHEMINANT UN LIQUIDE OU UN MILIEU MOU ET/OU DE DÉTECTION DE NIVEAU

(30) Priority: 17.11.2017 EP 17202318
(43) Date of publication of application: 23.09.2020
(73) Proprietor: Hochschule für angewandte Wissenschaften Fachhochschule Coburg, 96450 Coburg (DE)
(72) Inventor: EBERT, Sandra, 98673 Eisfeld OT Harras (DE); LINDNER, Gerhard, 96450 Coburg (DE); DRESE, Klaus-Stefan, 96489 Niederfüllbach (DE); TIETZE, Sabrina, 96361 Steinbach / Wald (DE); VOGT, Thomas, 96274 Itzgrund OT Kaltenbrunn (DE); LASOTA, Sandra, 96450 Coburg (DE); SCHWUCHOW, Katrin, 96450 Coburg (DE); KREMPEL, Sandro, 96515 Judenbach (DE); LANDSKRON, Johannes, 91301 Forchheim (DE); ROSSTEUTSCHER, Immanuel, 96450 Coburg (DE); BECKER, David, 72072 Tübingen (DE)
(74) Representative: Maikowski & Ninnemann Patentanwälte Partnerschaft mbB
(86) International application number: PCT/EP2018/081785
(87) International publication number: WO 2019/097055

(56) References cited:
- WO-A1-93/03340
- WO-A1-2017/125613
- WO-A2-2010/034713
- DE-A1-102014 104 983
- DE-A1-102015 113 311
- US-A- 4 679 430
- US-A1- 2011 239 769
- US-A1- 2011 239 769
- US-B1- 6 575 043

## Description

The invention relates to a device for detecting deposition layers in a conduit conducting a liquid or a soft medium and/or for level detection according to claim 1 and a method for detecting deposition layers in a conduit conducting a liquid or a soft medium and/or for level detection according to claim 10.

Devices and methods for non-destructive testing of conduits are known from the prior art, wherein for example US 6,192,751 B1 discloses a method for fluid level sensing in a sludge laden container using elastic waves propagating a side wall of the container. However, the results obtained by that sensing method may strongly depend on external parameters such as a temperature change, a change of the thickness of the sludge layer and/or a flow of the liquid and thus may be inaccurate. Further, WO93/03340 A1 discloses a sensor including a transducer connected to a support structure and positioned generally adjacent a defined space for transmitting and receiving ultrasonic signals across the defined space. US 4 679 430 A discloses a method for detecting an interface of a liquid in a container comprising, causing Lamb waves to propagate through a portion of a wall of the container, receiving the Lamb waves after they have propagated through the portion of the wall, and detecting the liquid interface in response to the amplitude of the received Lamb waves.

It is therefore an object of the invention to provide a device and a method permitting more accurate measurements.

According to the invention, a device for detecting deposition layers in a conduit conducting a liquid or a soft medium and/or for level detection is provided, the device comprising
- a transmitter for generating acoustic waves;
- a receiver for receiving acoustic waves evoked by the transmitter;
- a holder carrying the transmitter and the receiver, wherein the holder is configured to be detachably connected to the conduit in such a way that the transmitter and the receiver are arranged on an outer side of a sidewall of the conduit, wherein
- a single transmitter-receiver unit provides both the transmitter and the receiver or the transmitter and the receiver are separate units arranged in a distance from one another at the holder in such a way that the transmitter and the receiver are located in a common plane extending at least essentially perpendicular to a longitudinal axis of the conduit when the holder is connected to the conduit,
- an evaluation unit for evaluating signals generated by the receiver upon receipt of acoustic waves evoked by the transmitter to detect a deposition layer on an inner surface of the sidewall of the conduit and/or for detecting whether the level of the medium is below a predetermined value, wherein the transmitter is configured for evoking Lamb waves or Lamb-Rayleigh waves in the sidewall of the conduit, wherein a portion of the Lamb waves or Lamb-Rayleigh waves is converted into volume acoustic waves in the medium, wherein the receiver is configured for receiving first acoustic waves in the form of the Lamb waves or Lamb-Rayleigh waves excited by the transmitter in the sidewall of the conduit and propagating in the sidewall from the transmitter to the receiver and for receiving second acoustic waves evoked by the transmitter and propagating at least partially through the medium, wherein the second acoustic waves comprise the volume acoustic waves in the medium generated by the conversion of the Lamb waves or Lamb-Rayleigh waves, wherein the evaluation unit is configured to detect a deposition layer on the inner surface of the sidewall of the conduit and/or whether the level of the medium is below a predetermined value by evaluating first signals generated by the receiver upon receipt of the first acoustic waves and second signals generated by the receiver upon receipt of the second acoustic waves.

The contour of the conduit cross section may have a circular, an oval, a similar or any other round shape. For example, the contour of the conduit cross section does not possess corners, which could provoke a reflection of circumferential acoustic waves.

Using a holder carrying the transmitter and the receiver that can be detachably mounted to the conduit facilitates the monitoring of existing conduit systems and at the same time reliably pre-defines the position of the transmitter relative to the receiver. The holder may be configured to be clamped to the conduit. For example, the holder comprises two clamping arms that are mounted to the conduit and then fixed to one another using fixing means (such as fixing screws, nuts and/or latching structures).

More particularly, the holder (e.g. the clamping arms) may be configured in such a way that it can be attached to conduits having different outer diameters (i.e. the holder may be adapted to the outer diameter of the conduit). Thus, the holder may be easily attached to an outer side of an existing conduit (e.g. a liquid filled pipe) and a deposition layer may be detected without having to introduce a sensor into the interior of the conduit. Further, the device according to the invention may be used for detecting soft deposition films, e.g. biofilms. In particular, the device can be used as a sensor for monitoring deposition layers of liquid filled pipes (e.g. of a production or supply facility) such that e.g. impairments of the production process and/or contaminations of the liquid may be avoided. In particular, the device according to the invention may be used for continuously monitoring of the conduit.

The transmitter and the receiver may be disposed on the holder in such a way that they will be are arranged diametrically opposed to one another at the outer side of the conduit when the holder is connected to the conduit.

Moreover, the device according to the invention comprises an evaluation unit for evaluating signals generated by the receiver upon receipt of acoustic waves evoked by the transmitter to detect a deposition layer on an inner surface of the sidewall of the conduit and/or for detecting whether the level of the medium is below a predetermined value.

In particular, the evaluation unit is a programmed device, e.g. a computer or a microcontroller, and may be configured for receiving signals from the receiver (using a wired or a wireless connection). Further, the evaluation unit may be arranged at the holder, too. However, it is also possible that the evaluation unit is a separate unit to be arranged in a distance from the conduit.

For example, evaluating the signal generated by the receiver by means of the evaluation unit comprises evaluating transmission times and/or amplitude values of the receiver signals and/or comparing the results of the evaluation with pre-determined values. In particular, the amplitude and/or the time response of a receiver signal is compared to pre-determined amplitude and/or the time response values. The pre-determined values may have been generated using a similar structure as the structure to be investigated (or the structure to be investigated itself), wherein a deposition layer was deposited whose properties (e.g. its thickness) or at least some of its properties were known. Also, the pre-determined values could be determined using a similar structure (or the structure to be investigated itself) without any deposition layer to obtain reference values for a non-coated structure. Variations from the reference values indicate the presence of a coating or permit to determine a change of properties of the deposition layer.

In particular, evaluating the receiver signals may enable a detection of the thickness of deposition layers with sub-mm thicknesses, e.g. by operating the transmitter at frequencies (for example at 1 MHz) higher than 5 kHz.

According to the invention, the receiver is configured for receiving first acoustic waves (surface acoustic waves) excited by the transmitter in the sidewall of the conduit and propagating (e.g. exclusively) in the sidewall and for receiving second acoustic waves evoked by the transmitter and propagating at least partially through the medium. For example, the first acoustic waves propagate in the sidewall along a circumferential path. Using such circumferential acoustic waves may avoid or at least reduce an influence of a flow of the medium such that reliable measurements may be carried out even if the medium is flowing.

Accordingly, the evaluation unit may be configured to detect a deposition layer on the inner surface of the sidewall of the conduit and/or whether the level of the medium is below a predetermined value by evaluating the first signals generated by the receiver upon receipt of the first acoustic waves and the second signals generated by the receiver upon receipt of the second acoustic waves.

The transmitter and/or the receiver may comprise a piezo element, e.g. an interdigital piezo-electric transducer. For example, when the holder is connected to the conduit, a piezo-electric substrate of the piezo element is arranged at the outer side of the conduit. In particular, using the holder, the piezo element may be connected to the conduit in a force-fitting manner. However, the piezo-electric substrate may not directly bear against the outer surface of the conduit. Rather, a material region for improving the acoustic coupling between the piezo element and the conduit may be arranged between the piezo-electric substrate and the conduit surface. The material region may comprise at least one adapting layer (e.g. a plastic foil) and/or a (e.g. thin) layer of ultrasonic gel. The material region may provide an acoustically homogeneous connection towards the conduit (e.g. without air inclusions).

According to another embodiment of the invention, at least two transmitter-receiver units are arranged at the holder for providing the transmitter and the receiver, respectively. The receiver units can be operated in a transmitting mode as well as in a receiving mode, wherein, however, one of the units is operated in the transmitting mode, while the other unit is operated in receiving mode. The units may also switch roles, i.e. at a first point in time the first unit may operate in transmitting mode, while the second unit operates in receiving mode, whereas at a second point in time the first unit may operate in receiving mode, while the second unit operates in transmitting mode.

Moreover, the transmitter (e.g. comprising the piezo element mentioned above) may be configured for evoking (e.g. plane) surface acoustic waves propagating entirely in the sidewall of the conduit from the transmitter to the receiver ("sidewall acoustic waves") and e.g. mainly in a direction perpendicular to the longitudinal axis of the conduit and/or the receiver may be configured for receiving surface acoustic waves propagating in the sidewall of the conduit and mainly in a direction perpendicular to the longitudinal axis of the conduit. The sidewall acoustic waves thus are acoustic waves that propagate exclusively in the conduit sidewall from the transmitter to the receiver. In particular, the surface acoustic waves propagate along a plane perpendicular to the longitudinal axis of the conduit, e.g. along at least a portion of the perimeter of the conduit. By means of the evaluation of both acoustic waves propagating in the sidewall of the conduit and acoustic waves propagating at least partially through the medium, besides the detection whether or not a deposition layer is present, it is e.g. possible to determine properties of the deposition layer such as the consistency, elasticity and/or stiffness of the deposition layer.

In other words, surface acoustic waves in the conduit sidewall may be generated and/or received that propagate in the circumferential direction of the conduit as already mentioned above. Such surface acoustic waves may be produced by means of an acoustic single phase piezo-electric transducer having a first (e.g. planar) electrode arranged at a side of the piezo-electric substrate that faces away from the conduit sidewall and at least one second (e.g. finger-shaped) electrode on the other side of the piezo-electric substrate. A transducer of this type is able to excite surface acoustic waves on the conduit sidewall with a wavelength which is determined by the spacing distance of the electrode fingers or similar electrode structures on piezo-electric substrate. The transmitter or receiver is arranged in such a way that the second electrode is orientated parallel to the longitudinal axis of the conduit, wherein using this transducer configuration surface acoustic waves (Lamb waves or Lamb-Rayleigh-waves) propagating perpendicular to the longitudinal axis of the conduit may be generated. In the case of Lamb waves or Lamb-Rayleigh-waves the displacement of opposite surfaces (i.e. the outer and the inner surface) of the conduit sidewall excited by the transmitter is correlated such that, in particular, the amplitude and/or the phases of the displacement movement of the inner and outer surface of the conduit sidewall are interrelated.

For example, the transmitter may be configured for exciting surface acoustic wave bursts, i.e. the transmitter uses a number of consecutive electric pulses with a pre-determined period length corresponding to the target frequency.

It is noted, however, that the transmitter and the receiver may also be configured and operated (e.g. by using a corresponding frequency) in such a way that in addition to the surface acoustic waves propagating perpendicular to the longitudinal axis of the conduit axis, acoustic waves (e.g. surface acoustic waves) propagating obliquely or parallel to the longitudinal axis of the conduit (i.e. in a plane orientated obliquely or parallel to the conduit axis) may be generated and received.

It is however also possible that the transmitter and/or the receiver is configured for evoking or receiving longitudinal compression waves in the medium, wherein the compression waves may predominantly propagate radially, i.e. in a direction perpendicular to the longitudinal axis of the conduit, wherein the compression waves may cross the conduit diametrically. Such compression waves may be excited by using a corresponding transmitter frequency. For example, by using a corresponding transmitter frequency, structural resonance vibrations of the piezo element may be excited causing the transmitter to predominantly excite compression waves, while only a small portion of the waves generated by the transmitter are surface acoustic waves in the conduit sidewall.

The invention is also related to a conduit arrangement, comprising a conduit and at least two (e.g. identical) devices for detecting deposition layers and/or for level detection according to the invention, wherein the holders of the devices are arranged in such a way that the receiver of one of the devices receives acoustic waves evoked by the transmitter of the other device. Such an arrangement could be used e.g. to determine the uniformity of a deposition layer and/or an influence of flow processes (e.g. the flow velocity) in the liquid. In particular, the receiver of one of the devices receives acoustic waves (e.g. surface acoustic waves) generated by the transmitter of the other device that propagate obliquely or parallel to the longitudinal axis of the conduit.

The invention is also related to a method for detecting deposition layers in a conduit conducting a liquid or a soft medium and/or for level detection, comprising the steps:
- providing a holder carrying a transmitter for generating acoustic waves and a receiver for receiving acoustic waves evoked by the transmitter;
- connecting the holder to the conduit in such a way that the transmitter and the receiver are arranged on an outer side of a sidewall of the conduit,
- generating acoustic waves in the sidewall of the conduit and/or the medium by means of the transmitter and detecting the acoustic waves by means of the receiver, wherein
- a single transmitter-receiver unit provides both the transmitter and the receiver or the transmitter and the receiver are separate units arranged in a distance from one another at the holder in such a way that the transmitter and the receiver are located in a common plane extending at least essentially perpendicular to a longitudinal axis of the conduit when the holder is connected to the conduit,
- evaluating signals generated by the receiver upon receipt of acoustic waves evoked by the transmitter to detect a deposition layer on an inner surface of the sidewall of the conduit and/or for detecting whether the level of the medium is below a predetermined value, further comprising evoking, by the transmitter Lamb waves or Lamb-Rayleigh waves in the sidewall of the conduit, wherein a portion of the Lamb waves or Lamb-Rayleigh waves is converted into volume acoustic waves in the medium, receiving, by the receiver, first acoustic waves in the form of the Lamb waves or Lamb-Rayleigh waves excited by the transmitter in the sidewall of the conduit and propagating in the sidewall from the transmitter to the receiver and receiving, by the receiver, second acoustic waves evoked by the transmitter and propagating at least partially through the medium, wherein the second acoustic waves comprise the volume acoustic waves in the medium generated by the conversion of the Lamb waves or Lamb-Rayleigh waves; and detecting a deposition layer on the inner surface of the sidewall of the conduit and/or whether the level of the medium is below a predetermined value by evaluating first signals generated by the receiver upon receipt of the first acoustic waves and second signals generated by the receiver upon receipt of the second acoustic waves .

According to an embodiment, the transmitter may be operated to alternately generate mainly surface acoustic waves in the sidewall of the conduit and mainly compression (volume) acoustic waves in the medium. For example, the transmitter may be switched between two different operational frequencies for predominantly generating either (e.g. circumferential) surface acoustic waves in the sidewall or (e.g. radial) compression acoustic waves in the medium, respectively. The alternate generation of surface acoustic waves and compression waves may contribute to e.g. a compensation of temperature effects, a determination of the thickness of solid deposition layers and/or a measurement of the horizontal liquid level in a horizontally orientated conduit (i.e. the liquid level of conduits extending horizontally). As already set forth above, the transmitter may be realized by a piezo element transducer (e.g. a single phase transducer), wherein the transducer is switched alternately between two excitation frequencies corresponding to the generation of surface acoustic waves and compression waves, respectively.

In a further embodiment, a single transmitter-receiver unit is arranged at the holder, wherein (e.g. diametrically) opposite of the transmitter-receiver unit a reflecting structure (e.g. a solid bar) is arranged at the holder and connected to the sidewall by the holder. The transmitter-receiver unit may then be operated in a pulse-echo mode, i.e. it may be switched electronically from a transmitting to a receiving mode by a multiplexer. This embodiment may also be operated without the reflecting structure, wherein a circumferential surface acoustic wave travelling along the whole perimeter of the sidewall of the conduit may then be detected after switching the transmitter-receiver unit from the transmitting to the receiving mode.

Accordingly, two alternating receiver signals may be generated. A third receiver signal (e.g. by means of an additional receiver) may be generated that could be used for further compensating temperature effects and/or for determining properties of the deposition layer. The three receiver signals may also be used for detecting the level of the medium.

In another embodiment of the invention, the holder is a first holder carrying two transmitter-receiver units providing the transmitter and the receiver, respectively, wherein a second holder is arranged at the conduit, wherein the second holder also carries two transmitter-receiver units, and wherein one of the transmitter-receiver units of the first holder and one of the transmitter-receiver units of the second holder are alternately operated as transmitter and receiver, respectively, such that, when the transmitter-receiver unit of the first holder is operated as a transmitter, the transmitter-receiver unit of the second holder is operated as receiver receiving acoustic waves evoked by the transmitter-receiver unit of the first holder, and vice versa. The transmitter-receiver units may be implemented by a single phase transducer, which may be set to predominantly generate circumferential surface acoustic waves, but which may also be configured to evoke acoustic waves propagating towards the receiver of the other holder. Switching some of the transmitter-receivers units as described above may allow determining information regarding a flow direction and/or flow velocity of the medium. The second holder in particular may be arranged in a distance from the first holder, wherein the distance may correspond to the diameter of the conduit.

It is noted that, of course, also the embodiments described above in conjunction with the device according to the invention could be used as embodiments of the method according to the invention. Conversely, embodiments described above in conjunction with the method according to the invention could be used as embodiments of the device according to the invention.

Embodiments of the invention will be described hereinafter with reference to the drawings, in which:
- Figure 1: shows a cross-sectional view of a device according to an embodiment of the invention, the device being arranged at a conduit;
- Figure 2: represents a Laser Doppler vibrometry analysis of surface acoustic waves propagating in a sidewall of a conduit;
- Figure 3: depicts receiver signals generated using the device according to the invention;
- Figure 4: represents Laser Doppler vibrometry measurements of acoustic waves propagating in a liquid conducted in a conduit;
- Figure 5: shows a cross-sectional view of a conduit illustrating the propagation of acoustic waves in the conduit sidewall and through the medium in the conduit;
- Figures 6: shows the conduit of Figure 5 with a deposition layer at an inner surface of the conduit sidewall;
- Figure 7: shows receiver signals generated using the device according to the invention for the detection of deposition layers; and
- Figure 8: depicts a partially liquid filled conduit.

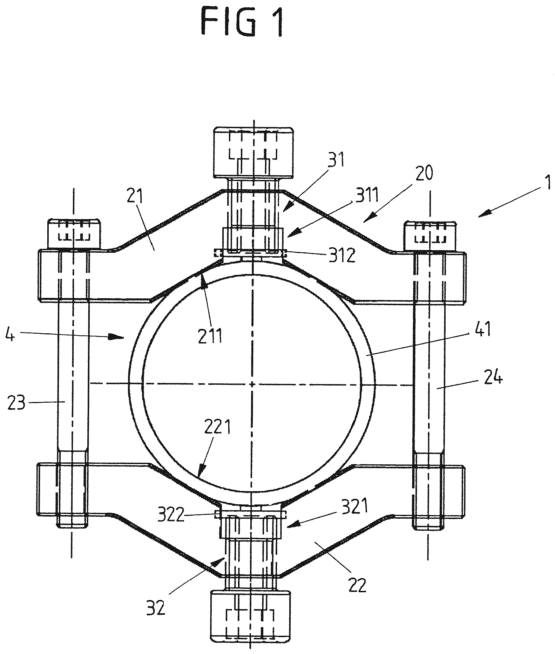

The sensor device 1 according to the invention shown in Figure 1 comprises a holder 20 having a first and a second clamping bracket 21, 22. The first clamping bracket 21 carries a transmitter 31 for generating acoustic waves and the second clamping bracket 22 carries a receiver 32 for receiving acoustic waves evoked by the transmitter 31. The transmitter 31 and the receiver 32 may be fixedly connected to the clamping bracket 21, 22, wherein they might at least partially be arranged in boreholes of the clamping bracket 21, 22.

The holder 20 is arranged at a tube-like conduit 4 for conducting a liquid or a soft medium, wherein a clamping region 211, 221 of the first and the second clamping bracket 21, 22 bears against an outer side of a sidewall 41 the conduit 4. The first and the second clamping bracket 21, 22 are connected to each other by screws 23, 24 such that the holder 20 is detachably fixed to the conduit 4. Further, the holder 20 is configured in such a way and the transmitter 31 and the receiver 32 are arranged at the holder 20 in such a way that, when the holder 20 is attached to the conduit 4, the transmitter 31 and the receiver 32 are arranged diametrically opposite to one another as shown in Figure 1.

The transmitter 31 and the receiver 32 each comprise a piezo element 311, 321 for generating and receiving acoustic waves in the conduit 4, respectively, i.e. acoustic waves propagating in the sidewall 41 and/or in the liquid conducted by the conduit 4. The piezo elements 311, 321 are arranged at/in the holder brackets 21, 22 in such a way that, when the holder 20 is attached to the conduit 4, they are pressed against the outer surface of the sidewall 41 such that they may be coupled in a force-fitting manner to the conduit 4. It is noted that a material region 312, 322 may be arranged between the piezo elements 311, 321 and the outer surface of the sidewall 41, wherein the material region 312, 322 (e.g. an ultrasonic gel) improves the acoustic coupling between the piezo elements 311, 321 and the conduit sidewall 41. Further, the piezo elements 311, 321 may be operated both as transmitter and receiver, i.e. the transmitter 31 may be switched to work as the receiver and the receiver 32 may be switched to work as the transmitter.

When the transmitter 31 is activated, surface acoustic waves will be generated within the sidewall 41 of the conduit 4. A portion of these acoustic waves will propagate in the sidewall 41 towards the receiver 32, while another portion will be converted into volume sound waves in the liquid and propagate to the receiver 32 through the liquid.

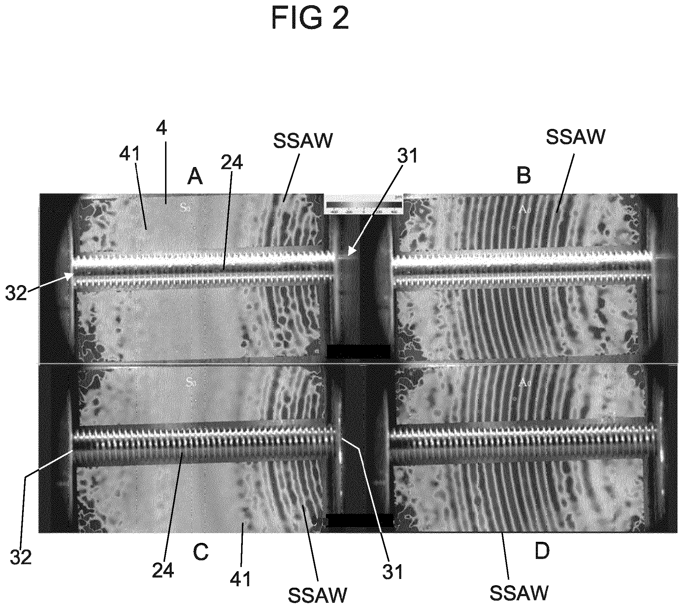

Surface acoustic waves (Lamb waves or Lamb-Rayleigh waves) generated by the transmitter 31 in a sidewall 41 of a conduit 4 are illustrated in Figure 2 (the surface acoustic waves being referred to as SSAW - sidewall surface acoustic waves), wherein the surface acoustic waves are made visible by laser Doppler vibrometry measurements. More particularly, Figure 2 illustrates the situation in an empty conduit (upper drawings A and B corresponding to two different points in time) and in a water-filled conduit (lower drawings C and D also corresponding to two different points in time), respectively, wherein the conduit 4 is shown in side view (i.e. the conduit 4 is looked at from the right hand side in Fig. 1). It is noted that Lamb waves may be generated if a transmitter frequency f = c_{L}/λ is used, wherein c_{L} is the velocity of the Lamb waves in the conduit sidewall (which depends on the material of the sidewall) and λ is the wavelength pre-determined by the distance between the electrode fingers of the piezo-electric transducer used as transmitter.

Using a metal (e.g. steel) conduit having a sidewall thickness of 3 mm, the phase velocity of the excited A₀ mode is about 2900 m/s. Having a distance between the electrode fingers of 3 mm results in a transmitter frequency of about 1 MHz. The transmitter piezo element may be configured (e.g. dimensioned) in such a way that structural vibrations of the piezo element are avoided, e.g. in order to avoid or suppress the generation of compression acoustic waves that propagate directly through the sidewall of the conduit and then through the medium. As mentioned above, single phase transducers may be used for realizing the transmitter. Further, other types of transducers might be used; e.g. transducers that comprise elongated piezo elements (bar shape piezo elements) or using a plurality of such elongated piezo elements arranged parallel to one another. The dimensions and/or the shape of the piezo elements may be adapted to the dimensions and/or the shape of the conduit.

However, it may also be possible to use transmitter frequencies (e.g. of about 1.9 MHz) that excite structural (e.g. thickness) resonance vibrations of the piezo element, e.g. in order to generate compression waves in the medium provided in the conduit.

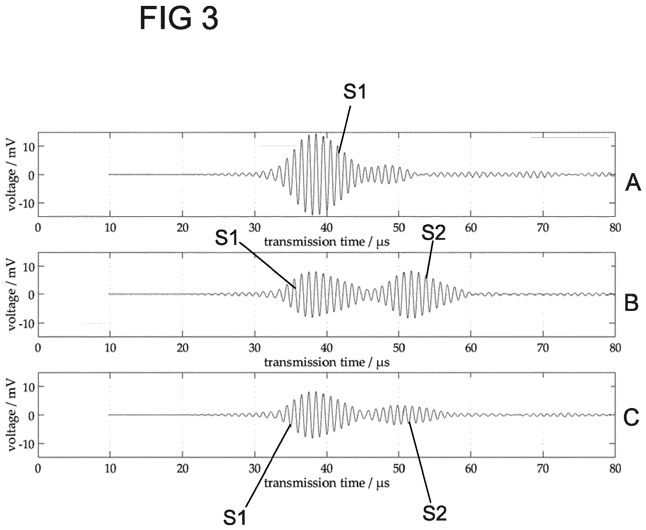

Figure 3 depicts three measurements carried out by means of a sensor device according to the invention, wherein the measurements have been carried out at an empty conduit in the form of a tube (measurement A), a water-filled tube (measurement B) and a water-filled tube with an interior blocking element (measurement C). The transmitter has been operated using frequencies that predominantly excite surface acoustic waves in the conduit sidewall as discussed above.

The measurement curves of measurements A-C represent receiver signals generated upon the receipt of acoustic waves evoked by the transmitter (such as the transmitter 31 in Fig. 1) of the sensor device, wherein the transmitter generated pulsed acoustic waves. Accordingly, the receiver (such as receiver 32 in Fig. 1) receives a pulsed acoustic wave and generates a corresponding pulsed signal S1. If the tube is empty, only acoustic waves propagating in the sidewall (such as sidewall 41 in Fig. 1) of the tube are excited such that a single acoustic wave pulse is received by the receiver resulting in a single receiver signal S1 (measurement A). Due to the large difference between the acoustic impedances of the sidewall material (e.g. steel) and air, only a negligible portion of acoustic waves will propagate through the air-filled inner volume of the conduit.

If the tube is filled with water (measurement B), a first portion of acoustic waves propagating along the tube sidewall and a second, delayed portion caused by acoustic waves converted into volume waves in the water and travelling through the water is received by the receiver (resulting in two successive receiver signals S1, S2). If a blocking element is arranged in the interior of the liquid filled tube (measurement C), the second acoustic pulse received by the receiver and thus the second receiver signal S2 is weakened.

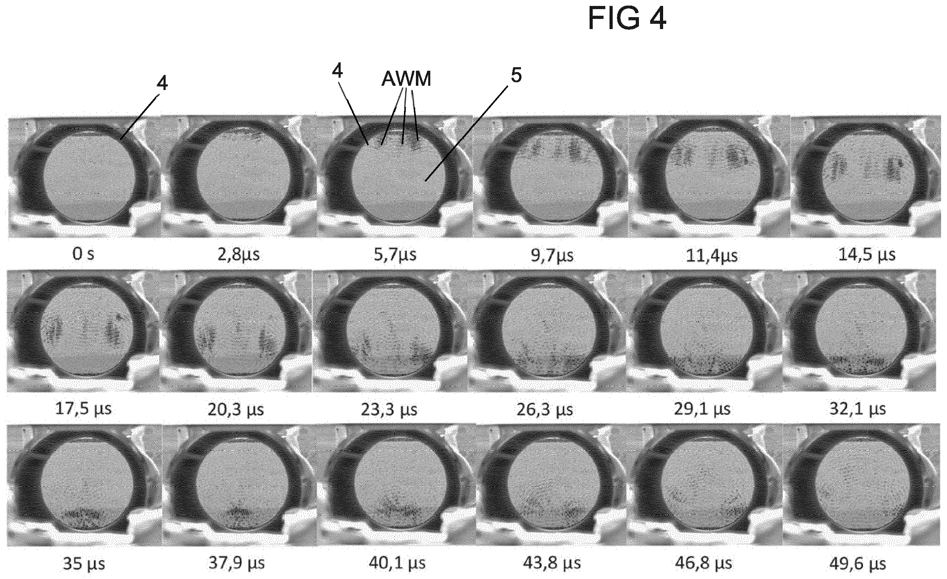

The propagation of acoustic waves AWM from the transmitter to the receiver through the medium 5 in the conduit 4 is illustrated in Figure 4 for a plurality of successive points in time (Fig. 4 showing a corresponding laser Doppler vibrometry measurement).

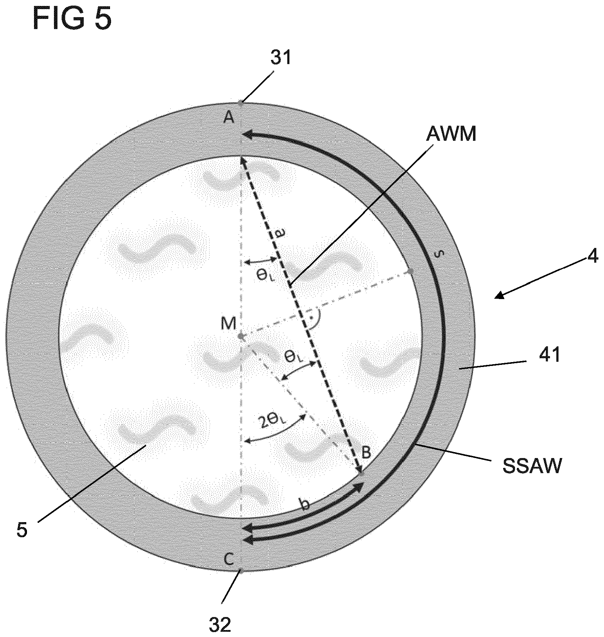

The propagation of both surface acoustic waves SSAW in the sidewall 41 of the conduit 4 and acoustic waves AWM through the medium 5 are illustrated in Figure 5. The surface acoustic waves portion SSAW evoked by the transmitter 31 located at point A propagates along a circumferential path (having a length s) in the sidewall 41 towards the receiver 32 located at point C.

The acoustic wave portion AWM is generated by a conversion of surface acoustic waves in the sidewall 41 into volume acoustic waves in the medium. The volume acoustic waves AWM propagate along a path AB (length a), which is a secant of the cross section of conduit 4, towards a sidewall point B through the medium 5, wherein at least a portion of the acoustic waves AWM in the medium 5 is reconverted into surface acoustic waves at point B, these surface acoustic waves (e.g. a Lamb wave) travelling in the sidewall 41 along a path with length b to the receiver 32. The path AB encloses an angle θ_{L} with a diameter AC (i.e. a connecting line between points A and C through a center M of the conduit cross section). The volume acoustic wave portion AWM is emitted into the medium 5 under the Rayleigh angle θ, i.e. θ_{L} = θ = arcsin (cₘ/c_{sw}), wherein c_{sw} is the sound velocity in the conduit sidewall and cₘ is the sound velocity in the medium. It is noted that the acoustic wave portion AWM impinges on the sidewall 41 in point B also at the Rayleigh angle θ (due to the circular cross section of conduit 4).

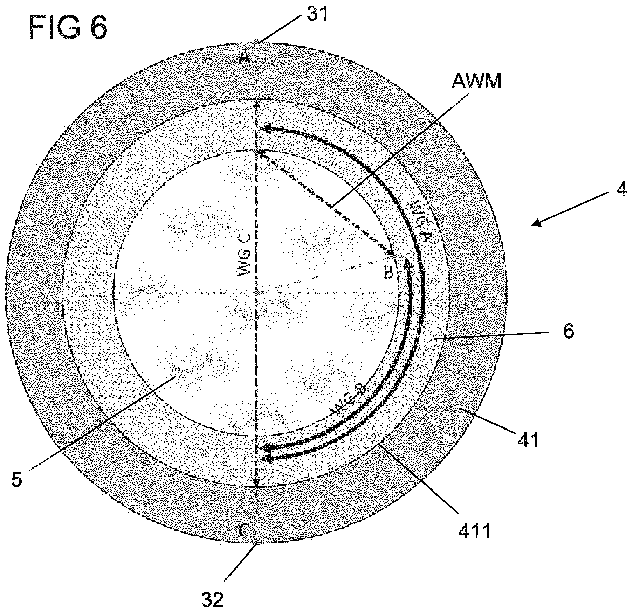

Figure 6 illustrates the situation if a deposition layer 6 is arranged at an inner surface 411 of the conduit 4. At least a portion WG A of the acoustic waves generated by transmitter 31 propagates in the deposition layer 6. Further, the angle under which the acoustic waves are coupled into the medium 5 changes due to the deposition layer 6. Further, the portion propagating through the medium 5 arrives at a point B of the deposition layer and is reconverted into surface acoustic waves WG B which at least partially propagate in the deposition layer 6 towards the receiver 32. If the thickness of the deposition layer 6 (e.g. a solid layer such as a lime layer) is larger than the thickness of the sidewall 41, surface acoustic waves may propagate in the deposition layer 6 rather than in the sidewall 41. Thus, if the effective sidewall thickness may become larger than the wavelength of the acoustic waves, Lamb-Rayleigh waves may be excited rather than Lamb waves. This may result in significant changes of the amplitude and/or the transmission times of the acoustic waves AWM, i.e. the waves that partially propagate through the medium 5. Further, the transmitter may be operated at a frequency to predominantly generate compression waves in the medium as already set forth above to detect transmission time deviations. The transmission time of such compression waves may decrease with increasing thickness of the deposition layer as the liquid cross section becomes smaller and the sound velocity may be higher in a solid deposition layer than in the liquid.

It is noted that in Fig. 5, 6 and 8, only a portion of the acoustic waves excited by the transmitter 31 is illustrated. For example, the transmitter 31 may excite acoustic waves in the sidewall 41 both in the clockwise and the anti-clockwise direction (e.g. mirror-symmetrically).

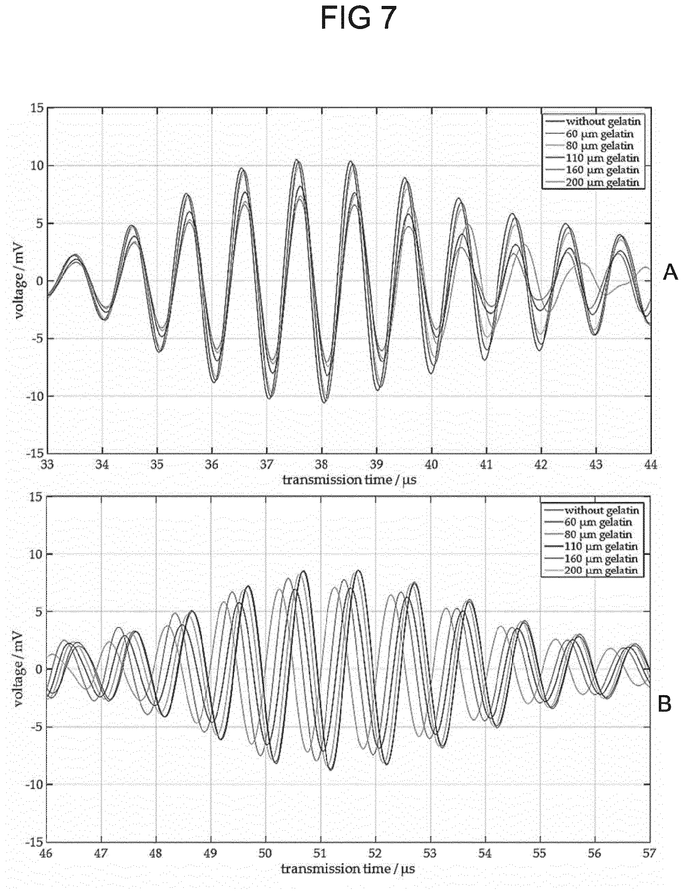

Figure 7 illustrates transmission time measurements of the surface acoustic waves in the conduit sidewall (measurements A) and of the volume acoustic waves propagating through the medium in the conduit (measurements B) for soft deposition (gelatine) layers with different thicknesses. An increasing thickness of the deposition layer results in an increased transmission time of the surface acoustic waves in the conduit sidewall, while the transmission time of the volume acoustic waves decreases. The amplitude of both the surface and the volume acoustic waves decreases due to dampening effects caused by the deposition layers. Since the transmission time of the acoustic waves depends on the thickness (and other properties) of the deposition layer, it is possible (using a suited calibration) to determine the thickness and/or other properties of the deposition layers by means of transmission time measurements, wherein in addition the amplitude measurements may be taken into account. For example, an evaluation of the amplitude of the receiver signal might be used to compensate for temperature drifts. For example, a temperature change of the medium may result in a shift of the transmission time, while the signal amplitude remains unchanged or is affected differently. Using the ratio between a change of the transmission time and a change (e.g. a reduction) of the signal amplitude, it may be determined whether a change of the receiver signal is caused by a temperature change or a deposition layer and/or the temperature change may be compensated. Further, a temperature change of the medium may be detected by exciting compression waves in the medium propagating directly through the medium to the receiver since the transmission time of such compression waves mainly depends on the sound velocity in the medium (which, in turn, depends on the temperature).

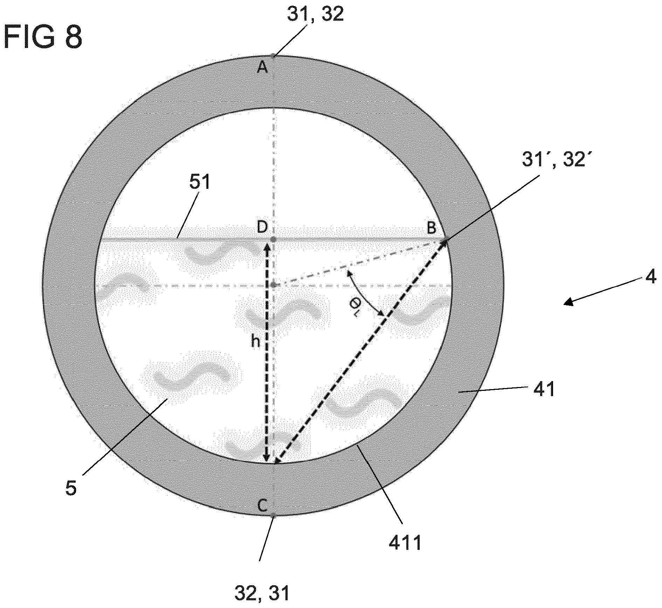

Figure 8 illustrates another possibility of using the device according to the invention, namely for detecting if the height h of a horizontal level 51 of the medium 5 in the horizontally oriented conduit 4, i.e. the height h of the level 51 of the medium 5 extending parallel to the longitudinal axis of the conduit 4, drops below a minimal height hₘᵢₙ. The level height h is measured on a diameter line perpendicular to the level 51 between a point D of the level 51 and a bottom of the liquid, i.e. an intersection of the diameter line and the inner surface 411 of the conduit sidewall 41.

An acoustic wave excited by the transmitter-receiver unit 31 at position A coupled into the inner volume of conduit 4 can reach the receiver 32 only if the level 51 has a minimal height hₘᵢₙ = 2r cos² θ_{L}. Thus, if the liquid level 51 drops below the minimal height hₘᵢₙ, the receiver signal will vanish. Using a plurality of transmitter and/or receivers arranged in the same plane perpendicular to the longitudinal axis of the conduit 4, but at different circumferential positions (such as the transmitter-receiver unit 31', 32' at position B), a plurality of different liquid levels 51 may be detected (the transmitter-receiver units at positions A and B being operated in the transmitting mode, while the transmitter-receiver unit at position C is operated in the receiving mode).

The liquid level 51 may also be measured by using the transmitter-receiver unit at position C as transmitter for generating (pulsed) compression waves (e.g. by using a thickness vibration resonance frequency) in the liquid reflected at the surface of the liquid back to the transmitter-receiver unit at position C, which may also be operated for receiving the reflected waves in a pulse-echo mode.

## Claims

1. Device for detecting deposition layers in a conduit conducting a liquid or a soft medium and/or for level detection, comprising
- a transmitter (31) for generating acoustic waves (SSAW, AWM);
- a receiver (32) for receiving acoustic waves (SSAW, AWM) evoked by the transmitter (31);
- a holder (20) carrying the transmitter (31) and the receiver (32), wherein the holder (20) is configured to be detachably connected to the conduit (4) in such a way that the transmitter (31) and the receiver (32) are arranged on an outer side of a sidewall (41) of the conduit (4), wherein
- a single transmitter-receiver unit provides both the transmitter (31) and the receiver (32) or the transmitter (31) and the receiver (32) are separate units arranged in a distance from one another at the holder (20) in such a way that the transmitter (31) and the receiver (32) are located in a common plane extending at least essentially perpendicular to a longitudinal axis of the conduit (4) when the holder (20) is connected to the conduit (4); and
- an evaluation unit for evaluating signals generated by the receiver (32) upon receipt of acoustic waves (SSAW, AWM) evoked by the transmitter (31) to detect a deposition layer (6) on an inner surface (411) of the sidewall (41) of the conduit (4) and/or for detecting whether the level (51) of the medium (5) is below a predetermined value, wherein
the transmitter (31) is configured for evoking Lamb waves or Lamb-Rayleigh waves in the sidewall (41) of the conduit (4), wherein a portion of the Lamb waves or Lamb-Rayleigh waves is converted into volume acoustic waves in the medium (5), wherein
the receiver (32) is configured for receiving first acoustic waves in the form of the Lamb waves or Lamb-Rayleigh waves excited by the transmitter (31) in the sidewall (41) of the conduit (4) and propagating in the sidewall (41) from the transmitter (31) to the receiver (32) and for receiving second acoustic waves evoked by the transmitter (31) and propagating at least partially through the medium (5), wherein the second acoustic waves comprise the volume acoustic waves in the medium (5) generated by the conversion of the Lamb waves or Lamb-Rayleigh waves, wherein
the evaluation unit is configured to detect a deposition layer (6) on the inner surface (411) of the sidewall (41) of the conduit (4) and/or whether the level (51) of the medium (6) is below a predetermined value by evaluating first signals generated by the receiver (32) upon receipt of the first acoustic waves and second signals generated by the receiver (32) upon receipt of the second acoustic waves.

2. Device as claimed in claim 1, wherein the transmitter (31) and the receiver (32) are arranged diametrically opposed to one another at the outer side of the sidewall (41) of the conduit (4) when the holder (20) is connected to the conduit (4).

3. Device as claimed in any of the preceding claims, wherein the transmitter (31) and/or the receiver (32) comprises a piezo element.

4. Device as claimed in claim 3, wherein, when the holder (20) is connected to the sidewall (41) of the conduit (4), a piezo-electric substrate of the piezo element is arranged at the outer side of the sidewall (41).

5. Device as claimed in any of the preceding claims, wherein the transmitter (31) is configured for evoking surface acoustic waves (SSAW) mainly in a direction perpendicular to the longitudinal axis of the conduit (4) and/or the receiver (32) is configured for receiving surface acoustic waves (SSAW) propagating in the sidewall (41) of the conduit (4) and mainly in a direction perpendicular to the longitudinal axis of the conduit (4).

6. Device as claimed in claim 5, wherein the surface acoustic waves (SSAW) propagate in the sidewall (41) along a circumferential path.

7. Device as claimed in any of the preceding claims, wherein the receiver (32) is configured for receiving Lamb waves or Lamb-Rayleigh waves in the sidewall (41) of the conduit (4).

8. Device as claimed in any of the preceding claims, wherein the transmitter (31) and/or the receiver (32) is configured for evoking or receiving longitudinal compression waves (AWM) in the medium (5).

9. Conduit arrangement, comprising a conduit and at least two devices as claimed in any of the preceding claims, wherein the holders (20) of the devices (1) are arranged in such a way that the receiver of one of the devices (1) receives acoustic waves (SSAW, AWM) evoked by the transmitter of the other device (1).

10. Method for detecting deposition layers in a conduit conducting a liquid or a soft medium and/or for level detection, comprising the steps:
- providing a holder (20) carrying a transmitter (31) for generating acoustic waves (SSAW, AWM) and a receiver (32) for receiving acoustic waves (SSAW, AWM) evoked by the transmitter (31);
- connecting the holder (20) to the conduit (4) in such a way that the transmitter (31) and the receiver (32) are arranged on an outer side of a sidewall (41) of the conduit (4),
- generating acoustic waves in the sidewall (41) of the conduit (4) and/or the medium (5) by means of the transmitter (31) and detecting the acoustic waves (SSAW, AWM) by means of the receiver (32), wherein
- a single transmitter-receiver unit provides both the transmitter (31) and the receiver (32) or the transmitter and the receiver (31, 32) are separate units arranged in a distance from one another at the holder (20) in such a way that the transmitter (31) and the receiver (32) are located in a common plane extending at least essentially perpendicular to a longitudinal axis of the conduit (4) when the holder (20) is connected to the conduit (4); and
- evaluating signals generated by the receiver (32) upon receipt of acoustic waves (SSAW, AWM) evoked by the transmitter (31) to detect a deposition layer (6) on an inner surface (411) of the sidewall (41) of the conduit (4) and/or for detecting whether the level (51) of the medium (5) is below a predetermined value, further comprising
evoking, by the transmitter (31) Lamb waves or Lamb-Rayleigh waves in the sidewall (41) of the conduit (4), wherein a portion of the Lamb waves or Lamb-Rayleigh waves is converted into volume acoustic waves in the medium (5),
receiving, by the receiver (32), first acoustic waves in the form of the Lamb waves or Lamb-Rayleigh waves excited by the transmitter (31) in the sidewall (41) of the conduit (4) and propagating in the sidewall (41) from the transmitter (31) to the receiver (32) and receiving, by the receiver (32), second acoustic waves evoked by the transmitter (31) and propagating at least partially through the medium (5), wherein the second acoustic waves comprise the volume acoustic waves in the medium (5) generated by the conversion of the Lamb waves or Lamb-Rayleigh waves; and
detecting a deposition layer (6) on the inner surface (411) of the sidewall (41) of the conduit (4) and/or whether the level (51) of the medium (6) is below a predetermined value by evaluating first signals generated by the receiver (32) upon receipt of the first acoustic waves and second signals generated by the receiver (32) upon receipt of the second acoustic waves.

11. Method as claimed in claim 10, wherein the transmitter (31) is operated to alternately generate mainly acoustic waves (SSAW) in the sidewall (41) of the conduit (4) and mainly acoustic waves (AWM) in the medium (5).

12. Method as claimed in claim 10 or 11, wherein the holder (20) is a first holder carrying two transmitter-receiver units providing the transmitter (31) and the receiver (32), respectively, wherein a second holder is arranged at the conduit (4), wherein the second holder also carries two transmitter-receiver units, and wherein one of the transmitter-receiver units of the first holder and one of the transmitter-receiver units of the second holder are alternately operated as transmitter and receiver, respectively, such that, when the transmitter-receiver unit of the first holder is operated as a transmitter, the transmitter-receiver unit of the second holder is operated as receiver receiving acoustic waves evoked by the transmitter-receiver unit of the first holder, and vice versa.

## Patentansprüche

1. Vorrichtung zur Erfassung von Abscheidungsschichten in einer Leitung, die eine Flüssigkeit oder ein weiches Medium führt, und/oder zur Pegelerfassung, umfassend
- einen Sender (31) zur Erzeugung von Schallwellen (SSAW, AWM);
- einen Empfänger (32) zum Empfang von Schallwellen (SSAW, AWM), die durch den Sender (31) hervorgerufen wurden;
- eine Halterung (20), die den Sender (31) und den Empfänger (32) trägt, wobei die Halterung (20) dazu ausgebildet ist, derart mit der Leitung (4) lösbar verbunden zu werden, dass der Sender (31) und der Empfänger (32) auf einer Außenseite einer Seitenwand (41) der Leitung (4) angeordnet sind, wobei
- eine einzelne Sender-Empfänger-Einheit sowohl den Sender (31) als auch den Empfänger (32) bereitstellt oder der Sender (31) und der Empfänger (32) separate Einheiten sind, die in einem Abstand voneinander derart an der Halterung (20) angeordnet sind, dass sich der Sender (31) und der Empfänger (32) in einer gemeinsamen Ebene befinden, die sich wenigstens im Wesentlichen senkrecht zu einer Längsachse der Leitung (4) erstreckt, wenn die Halterung (20) mit der Leitung (4) verbunden ist; und
- eine Auswerteeinheit zum Auswerten von Signalen, die beim Empfang von durch den Sender (31) hervorgerufenen Schallwellen (SSAW, AWM) durch den Empfänger (32) erzeugt wurden, um eine Abscheidungsschicht (6) auf einer Innenfläche (411) der Seitenwand (41) der Leitung (4) zu erfassen und/oder um festzustellen, ob der Pegel (51) des Mediums (5) unter einem vorbestimmten Wert liegt, wobei
der Sender (31) dazu ausgebildet ist, Lamb-Wellen oder Lamb-Rayleigh-Wellen in der Seitenwand (41) der Leitung (4) hervorzurufen, wobei ein Teil der Lamb-Wellen oder Lamb-Rayleigh-Wellen in akustische Volumenwellen in dem Medium (5) umgewandelt wird, wobei
der Empfänger (32) dazu ausgebildet ist, erste Schallwellen in Form von Lamb-Wellen oder Lamb-Rayleigh-Wellen zu empfangen, die durch den Sender (31) in der Seitenwand (41) der Leitung (4) angeregt wurden und sich in der Seitenwand (41) von dem Sender (31) zu dem Empfänger (32) ausbreiten, und zweite Schallwellen zu empfangen, die durch den Sender (31) hervorgerufen wurden und sich wenigstens teilweise durch das Medium (5) ausbreiten, wobei die zweiten Schallwellen die durch die Umwandlung der Lamb-Wellen oder Lamb-Rayleigh-Wellen erzeugten akustischen Volumenwellen in dem Medium (5) umfassen, wobei
die Auswerteeinheit dazu ausgebildet ist, eine Abscheidungsschicht (6) auf der Innenfläche (411) der Seitenwand (41) der Leitung (4) zu erfassen und/oder festzustellen, ob der Pegel (51) des Mediums (5) unter einem vorbestimmten Wert liegt, indem die durch den Empfänger (32) beim Empfang der ersten Schallwellen erzeugten ersten Signale und die durch den Empfänger (32) beim Empfang der zweiten Schallwellen erzeugten zweiten Signale ausgewertet werden.

2. Vorrichtung nach Anspruch 1, wobei der Sender (31) und der Empfänger (32) einander diametral gegenüberliegend an der Außenseite der Seitenwand (41) der Leitung (4) angeordnet sind, wenn die Halterung (20) mit der Leitung (4) verbunden ist.

3. Vorrichtung nach einem der vorhergehenden Ansprüche, wobei der Sender (31) und/oder der Empfänger (32) ein Piezoelement umfasst.

4. Vorrichtung nach Anspruch 3, wobei dann, wenn die Halterung (20) mit der Seitenwand (41) der Leitung (4) verbunden ist, ein piezoelektrisches Substrat des Piezoelements an der Außenseite der Seitenwand (41) angeordnet ist.

5. Vorrichtung nach einem der vorhergehenden Ansprüche, wobei der Sender (31) dazu ausgebildet ist, akustische Oberflächenwellen (SSAW) hauptsächlich in einer Richtung senkrecht zu der Längsachse der Leitung (4) hervorzurufen und/oder der Empfänger (32) dazu ausgebildet ist, akustische Oberflächenwellen (SSAW) zu empfangen, die sich in der Seitenwand (41) der Leitung (4) und hauptsächlich in einer Richtung senkrecht zu der Längsachse der Leitung (4) ausbreiten.

6. Vorrichtung nach Anspruch 5, wobei sich die akustischen Oberflächenwellen (SSAW) in der Seitenwand (41) entlang eines umlaufenden Pfades ausbreiten.

7. Vorrichtung nach einem der vorhergehenden Ansprüche, wobei der Empfänger (32) dazu ausgebildet ist, Lamb-Wellen oder Lamb-Rayleigh-Wellen in der Seitenwand (41) der Leitung (4) zu empfangen.

8. Vorrichtung nach einem der vorhergehenden Ansprüche, wobei der Sender (31) und/oder der Empfänger (32) dazu ausgebildet ist, longitudinale Kompressionswellen (AWM) in dem Medium (5) hervorzurufen oder zu empfangen.

9. Leitungsanordnung, umfassend eine Leitung und mindestens zwei Vorrichtungen nach einem der vorhergehenden Ansprüche, wobei die Halterungen (20) der Vorrichtungen (1) derart angeordnet sind, dass der Empfänger einer der Vorrichtungen (1) von dem Sender der anderen Vorrichtung (1) hervorgerufene Schallwellen (SSAW, AWM) empfängt.

10. Verfahren zur Erfassung von Abscheidungsschichten in einer Leitung, die eine Flüssigkeit oder ein weiches Medium führt, und/oder zur Pegelerfassung, mit den folgenden Schritten:
- Bereitstellen einer Halterung (20), die einen Sender (31) zur Erzeugung von Schallwellen (SSAW, AWM) und einen Empfänger (32) zum Empfang von durch den Sender (31) hervorgerufenen Schallwellen (SSAW, AWM) trägt;
- Verbinden der Halterung (20) mit der Leitung (4) in einer solchen Weise, dass der Sender (31) und der Empfänger (32) auf einer Außenseite einer Seitenwand (41) der Leitung (4) angeordnet sind,
- Erzeugen von Schallwellen in der Seitenwand (41) der Leitung (4) und/oder dem Medium (5) mit Hilfe des Senders (31) und Erfassen der Schallwellen (SSAW, AWM) mit Hilfe des Empfängers (32), wobei
- eine einzelne Sender-Empfänger-Einheit sowohl den Sender (31) als auch den Empfänger (32) bereitstellt oder der Sender und der Empfänger (31, 32) separate Einheiten sind, die in einem Abstand voneinander derart an der Halterung (20) angeordnet sind, dass sich der Sender (31) und der Empfänger (32) in einer gemeinsamen Ebene befinden, die sich wenigstens im Wesentlichen senkrecht zu einer Längsachse der Leitung (4) erstreckt, wenn die Halterung (20) mit der Leitung (4) verbunden ist; und
- Auswerten von Signalen, die beim Empfang von durch den Sender (31) hervorgerufenen Schallwellen (SSAW, AWM) durch den Empfänger (32) erzeugt wurden, um eine Abscheidungsschicht (6) auf einer Innenfläche (411) der Seitenwand (41) der Leitung (4) zu erfassen und/oder um festzustellen, ob der Pegel (51) des Mediums (5) unter einem vorbestimmten Wert liegt, ferner umfassend
Hervorrufen, durch den Sender (31), von Lamb-Wellen oder Lamb-Rayleigh-Wellen in der Seitenwand (41) der Leitung (4), wobei ein Teil der Lamb-Wellen oder Lamb-Rayleigh-Wellen in akustische Volumenwellen in dem Medium (5) umgewandelt wird, Empfangen, durch den Empfänger (32), von ersten Schallwellen in Form der Lamb-Wellen oder Lamb-Rayleigh-Wellen, die durch den Sender (31) in der Seitenwand (41) der Leitung (4) angeregt wurden und sich in der Seitenwand (41) von dem Sender (31) zu dem Empfänger (32) ausbreiten, und Empfangen, durch den Empfänger (32), von zweiten Schallwellen, die durch den Sender (31) hervorgerufen wurden und sich wenigstens teilweise durch das Medium (5) ausbreiten, wobei die zweiten Schallwellen die durch die Umwandlung der Lamb-Wellen oder Lamb-Rayleigh-Wellen erzeugten akustischen Volumenwellen in dem Medium (5) umfassen; und
Erfassen einer Abscheidungsschicht (6) auf der Innenfläche (411) der Seitenwand (41) der Leitung (4) und/oder Feststellen, ob der Pegel (51) des Mediums (6) unter einem vorbestimmten Wert liegt, indem die durch den Empfänger (32) beim Empfang der ersten Schallwellen erzeugten ersten Signale und die durch den Empfänger (32) beim Empfang der zweiten Schallwellen erzeugten zweiten Signale ausgewertet werden.

11. Verfahren nach Anspruch 10, wobei der Sender (31) dazu betrieben wird, um abwechselnd hauptsächlich Schallwellen (SSAW) in der Seitenwand (41) der Leitung (4) und hauptsächlich Schallwellen (AWM) in dem Medium (5) zu erzeugen.

12. Verfahren nach Anspruch 10 oder 11, wobei die Halterung (20) eine erste Halterung ist, die zwei Sender-Empfänger-Einheiten trägt, die den Sender (31) bzw. den Empfänger (32) bereitstellen, wobei eine zweite Halterung an der Leitung (4) angeordnet ist, wobei die zweite Halterung außerdem zwei Sender-Empfänger-Einheiten trägt, und wobei eine der Sender-Empfänger-Einheiten der ersten Halterung und eine der Sender-Empfänger-Einheiten der zweiten Halterung abwechselnd als Sender bzw. Empfänger betrieben werden, sodass dann, wenn die Sender-Empfänger-Einheit der ersten Halterung als Sender betrieben wird, die Sender-Empfänger-Einheit der zweiten Halterung als Empfänger betrieben wird, der durch die Sender-Empfänger-Einheit der ersten Halterung hervorgerufene Schallwellen empfängt, und umgekehrt.

## Revendications

1. Dispositif pour détecter des couches de dépôt dans un conduit conduisant un liquide ou un milieu mou et/ou de détection de niveau, comprenant
- un émetteur (31) pour générer des ondes acoustiques (SSAW, AWM) ;
- un récepteur (32) pour recevoir des ondes acoustiques (SSAW, AWM) évoquées par l'émetteur (31) ;
- un support (20) portant l'émetteur (31) et le récepteur (32), dans lequel le support (20) est configuré pour être relié de manière amovible au conduit (4) de telle sorte que l'émetteur (31) et le récepteur (32) sont agencés sur un côté extérieur d'une paroi latérale (41) du conduit (4), dans lequel
- une seule unité émetteur-récepteur fournit à la fois l'émetteur (31) et le récepteur (32) ou l'émetteur (31) et le récepteur (32) sont des unités séparées agencées à distance l'une de l'autre sur le support (20) de telle sorte que l'émetteur (31) et le récepteur (32) sont situés dans un plan commun s'étendant au moins essentiellement perpendiculairement à un axe longitudinal du conduit (4) lorsque le support (20) est relié au conduit (4) ; et
- une unité d'évaluation pour évaluer des signaux générés par le récepteur (32) à la réception d'ondes acoustiques (SSAW, AWM) évoquées par l'émetteur (31) pour détecter une couche de dépôt (6) sur une surface intérieure (411) de la paroi latérale (41) du conduit (4) et/ou pour détecter si le niveau (51) du milieu (5) est inférieur à une valeur prédéterminée, dans laquelle
l'émetteur (31) est configuré pour évoquer des ondes de Lamb ou des ondes de Lamb-Rayleigh dans la paroi latérale (41) du conduit (4), une partie des ondes de Lamb ou des ondes de Lamb-Rayleigh étant convertie en ondes acoustiques de volume dans le milieu (5), dans lequel
le récepteur (32) est configuré pour recevoir des premières ondes acoustiques sous forme d'ondes de Lamb ou d'ondes de Lamb-Rayleigh excitées par l'émetteur (31) dans la paroi latérale (41) du conduit (4) et se propageant dans la paroi latérale (41) de l'émetteur (31) au récepteur (32) et pour recevoir des deuxièmes ondes acoustiques évoquées par l'émetteur (31) et se propageant au moins partiellement dans le milieu (5), dans lequel les deuxièmes ondes acoustiques comprennent les ondes acoustiques de volume dans le milieu (5) générées par la conversion des ondes de Lamb ou des ondes de Lamb-Rayleigh, dans lequel
l'unité d'évaluation est configurée pour détecter une couche de dépôt (6) sur la surface intérieure (411) de la paroi latérale (41) du conduit (4) et/ou pour déterminer si le niveau (51) du milieu (5) est inférieur à une valeur prédéterminée en évaluant des premiers signaux générés par le récepteur (32) à la réception des premières ondes acoustiques et des deuxièmes signaux générés par le récepteur (32) à la réception des deuxièmes ondes acoustiques.

2. Dispositif selon la revendication 1, dans lequel l'émetteur (31) et le récepteur (32) sont agencés diamétralement opposés l'un à l'autre sur le côté extérieur de la paroi latérale (41) du conduit (4) lorsque le support (20) est relié au conduit (4).

3. Dispositif selon l'une quelconque des revendications précédentes, dans lequel l'émetteur (31) et/ou le récepteur (32) comprend un élément piézo.

4. Dispositif selon la revendication 3, dans lequel, lorsque le support (20) est relié à la paroi latérale (41) du conduit (4), un substrat piézoélectrique de l'élément piézo est agencé sur le côté extérieur de la paroi latérale (41).

5. Dispositif selon l'une quelconque des revendications précédentes, dans lequel l'émetteur (31) est configuré pour évoquer des ondes acoustiques de surface (SSAW) principalement dans une direction perpendiculaire à l'axe longitudinal du conduit (4) et/ou le récepteur (32) est configuré pour recevoir des ondes acoustiques de surface (SSAW) se propageant dans la paroi latérale (41) du conduit (4) et principalement dans une direction perpendiculaire à l'axe longitudinal du conduit (4).

6. Dispositif selon la revendication 5, dans lequel les ondes acoustiques de surface (SSAW) se propagent dans la paroi latérale (41) le long d'une trajectoire circonférentielle.

7. Dispositif selon l'une quelconque des revendications précédentes, dans lequel le récepteur (32) est configuré pour recevoir des ondes de Lamb ou des ondes de Lamb-Rayleigh dans la paroi latérale (41) du conduit (4).

8. Dispositif selon l'une quelconque des revendications précédentes, dans lequel l'émetteur (31) et/ou le récepteur (32) est configuré pour évoquer ou recevoir des ondes de compression longitudinales (AWM) dans le milieu (5).

9. Agencement de conduit, comprenant un conduit et au moins deux dispositifs selon l'une quelconque des revendications précédentes, dans lequel les supports (20) des dispositifs (1) sont agencés de telle sorte que le récepteur de l'un des dispositifs (1) reçoit des ondes acoustiques (SSAW, AWM) évoquées par l'émetteur de l'autre dispositif (1).

10. Procédé pour détecter des couches de dépôt dans un conduit conduisant un liquide ou un milieu mou et/ou de détection de niveau, comprenant les étapes suivantes :
- fournir un support (20) portant un émetteur (31) pour générer des ondes acoustiques (SSAW, AWM) et un récepteur (32) pour recevoir des ondes acoustiques (SSAW, AWM) évoquées par l'émetteur (31) ;
- relier le support (20) au conduit (4) de telle sorte que l'émetteur (31) et le récepteur (32) sont agencés sur un côté extérieur d'une paroi latérale (41) du conduit (4),
- générer des ondes acoustiques dans la paroi latérale (41) du conduit (4) et/ou du milieu (5) au moyen de l'émetteur (31) et détecter les ondes acoustiques (SSAW, AWM) au moyen du récepteur (32), dans lequel
- une seule unité émetteur-récepteur fournit à la fois l'émetteur (31) et le récepteur (32) ou l'émetteur et le récepteur (31, 32) sont des unités séparées agencées à distance l'une de l'autre sur le support (20) de telle sorte que l'émetteur (31) et le récepteur (32) sont situés dans un plan commun s'étendant au moins essentiellement perpendiculairement à un axe longitudinal du conduit (4) lorsque le support (20) est relié au conduit (4) ; et
- évaluer des signaux générés par le récepteur (32) à la réception d'ondes acoustiques (SSAW, AWM) évoquées par l'émetteur (31) pour détecter une couche de dépôt (6) sur une surface intérieure (411) de la paroi latérale (41) du conduit (4) et/ou pour détecter si le niveau (51) du milieu (5) est inférieur à une valeur prédéterminée, comprenant en outre
évoquer, par l'émetteur (31), des ondes de Lamb ou des ondes de Lamb-Rayleigh dans la paroi latérale (41) du conduit (4), une partie des ondes de Lamb ou des ondes de Lamb-Rayleigh étant convertie en ondes acoustiques de volume dans le milieu (5),
recevoir, par le récepteur (32), des premières ondes acoustiques sous forme des ondes de Lamb ou des ondes de Lamb-Rayleigh excitées par l'émetteur (31) dans la paroi latérale (41) du conduit (4) et se propageant dans la paroi latérale (41) de l'émetteur (31) au récepteur (32) et recevoir, par le récepteur (32), des deuxièmes ondes acoustiques évoquées par l'émetteur (31) et se propageant au moins partiellement dans le milieu (5), dans lequel les deuxièmes ondes acoustiques comprennent les ondes acoustiques de volume dans le milieu (5) générées par la conversion des ondes de Lamb ou des ondes de Lamb-Rayleigh ; et
détecter une couche de dépôt (6) sur la surface intérieure (411) de la paroi latérale (41) du conduit (4) et/ou déterminer si le niveau (51) du milieu (6) est inférieur à une valeur prédéterminée en évaluant des premiers signaux générés par le récepteur (32) à la réception des premières ondes acoustiques et des deuxièmes signaux générés par le récepteur (32) à la réception des deuxièmes ondes acoustiques.

11. Procédé selon la revendication 10, dans lequel l'émetteur (31) est utilisé pour générer en alternance des ondes principalement acoustiques (SSAW) dans la paroi latérale (41) du conduit (4) et des ondes principalement acoustiques (AWM) dans le milieu (5).

12. Procédé selon la revendication 10 ou 11, dans lequel le support (20) est un premier support portant deux unités émetteur-récepteur fournissant respectivement l'émetteur (31) et le récepteur (32), dans lequel un deuxième support est agencé au niveau du conduit (4), dans lequel le deuxième support porte également deux unités émetteur-récepteur, et dans lequel l'une des unités émetteur-récepteur du premier support et l'une des unités émetteur-récepteur du deuxième support sont utilisées en alternance comme émetteur et récepteur, respectivement, de sorte que, lorsque l'unité émetteur-récepteur du premier support est utilisée comme émetteur, l'unité émetteur-récepteur du deuxième support est utilisée comme récepteur recevant des ondes acoustiques évoquées par l'unité émetteur-récepteur du premier support, et vice-versa.
